# EUROPEAN PATENT APPLICATION

(11) **EP 3 483 680 A2**
(43) Date of publication of application: **15.05.2019**
(21) Application number: 18190307.1
(22) Date of filing: 22.08.2018
(51) Int. Cl.: G05B 19/409

(54) **A CONTROL ASSEMBLY FOR AN ELECTRIC DEVICE**

(30) Priority: 15.09.2017 HK 17109391; 20.10.2017 HK 17110717
(71) Applicant: Defond Electech Co., Ltd, Hongmei Second Industrial Area Hongmei Town Dongguan Guangdong 523160 (CN); Defond Components Limited, Chai Wan (HK)
(72) Inventor: NIEH, Cheng Chen, Chai Wan (HK); MOK, Man Kit, Chai wan (HK); LEUNG, Kwok Hang, Chai Wan (HK); CHAN, Ka Leung, Chai Wan (HK)
(74) Representative: Ferreccio, Rinaldo

(57) **Abstract**

A control assembly for controlling operation of an electric device having an electric motor, the control assembly including: a force sensor; an actuator configured for movement relative to the force sensor between at least one of a first relative position and a second relative position so as to apply at least one of a first amount of force and a second amount of force against the force sensor; and a control module configured for receiving from the force sensor at least a first signal indicative of a first amount of force and a second signal indicative of a second amount of force being applied against the force sensor by the actuator, wherein, the control module is configured for outputting control signals for controlling a speed of the electric motor by reference to the first amount of force and the second amount of force indicated by the received first and second signals.

## Description

### Technical Field

The present invention relates to control assemblies for controlling electric devices or appliances such as electric power tools, electric gardening tools and the like.

### Background of the Invention

Certain electric devices and appliances such as power tools will include an electric motor and a variable speed control assembly comprising for instance a variable speed trigger that is able to be actuated by a user's finger in order to control the speed of the electric motor. When the control assembly is operated, an actuator shaft may be displaced and the extent of the displacement may be used by control circuitry as the basis for variably controlling the speed of the motor. In certain existing control assemblies, the actuator shaft will be moved in a range of distances of around 4mm-10mm and will be operably connected with a biasing element such as a return spring which urges the actuator shaft into a default OFF position.

Unfortunately, one perceived problem associated with such existing control assemblies is that certain users may lack sufficient finger strength in order to apply the required amount of force to the actuator to effect operation of the electric motor. Another perceived problem associated with certain existing control assemblies such as those comprising a trigger is that they tend to utilise numerous moving mechanical parts which increases susceptibility to wear and incurs higher maintenance and repair costs over time. Furthermore, as the power capability of electric power tools is ever increasing, there is a perceived need to try and reduce the overall size and weight of such power tools to compensate for the inclusion of increasingly larger and heavier capacity electric motors.

### Summary of the Invention

The present invention seeks to alleviate at least one of the above-described problems.

The present invention may involve several broad forms. Embodiments of the present invention may include one or any combination of the different broad forms herein described.

In a first broad form, the present invention provides a control assembly for controlling operation of an electric device having an electric motor, the control assembly including: a force sensor; an actuator configured for movement relative to the force sensor between at least one of a first relative position and a second relative position so as to apply at least one of a first amount of force and a second amount of force against the force sensor; and a control module configured for receiving from the force sensor at least a first signal indicative of the first amount of force and a second signal indicative of the second amount of force being applied against the force sensor by the actuator, wherein, the control module is configured for outputting control signals for controlling a speed of the electric motor by reference to the first amount of force and the second amount of force indicated by the received first and second signals.

Preferably, the first amount of force may include a relative minimum amount of force applied against the force sensor by the actuator, and, the second amount of force may include a relative maximum amount of force applied against the force sensor by the actuator, and whereby the control module may be configured for outputting control signals for controlling a speed of the electric motor at a relative minimum speed and at a relative maximum speed respectively, by reference to the first amount of force and the second amount of force indicated by the received first and second signals.

Preferably, a distance of movement of the actuator relative to the force sensor between the first relative position and the second relative position may be less than approximately 1mm. Typically the force sensor may be implemented in the form of a thin film configuration.

Preferably, at least one of a switch and a sensor may be operably connected with the actuator to produce an output indicative of an amount of force being applied by the actuator to the force sensor, whereby operation of said electric device may be configured to be disabled in response to the output of said at least one of the switch and the sensor being indicative of force applied by the actuator to the force sensor falling below a threshold level.

Preferably, the actuator may be configured for movement relative to the force sensor into at least one intermediate position disposed between the first relative position and the second relative position so as to apply an intermediate amount of force between the relative minimum and relative maximum amounts of force against the force sensor, and whereby the control module may be configured for receiving a signal from the force sensor indicative of the intermediate amount of force being applied against the force sensor by the actuator, whereby the control module is configured for outputting a control signal for controlling a speed of the electric motor by reference to the intermediate amount of force indicated by the received signal.

Preferably, the actuator member may include a flexure member configured for movement between at least the first position and the second position relative to the force sensor to apply the first amount of force and the second amount of force to the force sensor.

Preferably, the force sensor may include at least one of a mechanical tactile type force sensor, a mechanical displacement type force sensor, a pneumatic touch type force sensor, a foil switch type force sensor, a digital tactile sensor array type force sensor, a capacitive type force sensor, a metal strain gauge type force sensor, a semiconductor strain gauge type force sensor, a piezoresistive type force sensor, a pyroelectric type force sensor, a sputtered thin film strain gauge type force sensor, an optical type force sensor, a magnetic type force sensor, an ultrasonic type force sensor, a chemical printing type force sensor, and an electro-chemical type force sensor.

Preferably, the present invention may include an electric motor reversing module configured for reversing a polarity of the electric motor.

Preferably, the present invention may include a haptic feedback mechanism configured for producing haptic feedback in response to a predefined threshold amount of force being applied to the force sensor by the actuator.

Preferably, the haptic feedback may be produced in response to each of a plurality of predefined threshold amounts of force being gradually applied to the force sensor by the actuator.

Preferably, the haptic feedback may include at least one of vibrational motion of the electric device, an optical output of the electric device, and an aural output of the electric device.

Preferably, the electric device may include at least one of an electric power tool and an electric gardening tool.

Preferably, the actuator may be operable by at least one of a trigger and a push-button type mechanism.

In a second broad form, the present invention provides a control assembly for controlling operation of an electric device having an electric motor, the control assembly including: a transducer; an actuator configured for movement relative to the transducer between at least one of a first relative position and a second relative position so as to apply at least one of a first amount of force and a second amount of force against the transducer; and a control module configured for receiving from the transducer at least a first signal indicative of the first amount of force and a second signal indicative of the second amount of force being applied against the transducer by the actuator, wherein, the control module is configured for outputting control signals for controlling a speed of the electric motor by reference to the first amount of force and the second amount of force indicated by the received first and second signals.

Preferably, the first amount of force may include a relative minimum amount of force applied against the transducer by the actuator, and, the second amount of force may include a relative maximum amount of force applied against the transducer by the actuator, and whereby the control module may be configured for outputting control signals for controlling a speed of the electric motor at a relative minimum speed and at a relative maximum speed respectively, by reference to the first amount of force and the second amount of force indicated by the received first and second signals.

Preferably, a distance of movement of the actuator relative to the transducer between the first relative position and the second relative position may be less than approximately 1mm.

Preferably, at least one of a switch and a sensor may be operably connected with the actuator to produce an output indicative of an amount of force being applied by the actuator to the transducer, whereby operation of said electric device may be configured to be disabled in response to the output of said at least one of the switch and the sensor being indicative of force applied by the actuator to the transducer falling below a threshold level.

Preferably, the actuator may be configured for movement relative to the transducer into at least one intermediate position disposed between the first relative position and the second relative position so as to apply an intermediate amount of force between the relative minimum and relative maximum amounts of force against the transducer, and whereby the control module may be configured for receiving a signal from the transducer indicative of the intermediate amount of force being applied against the transducer by the actuator, whereby the control module may be configured for outputting a control signal for controlling a speed of the electric motor by reference to the intermediate amount of force indicated by the received signal.

Preferably, the actuator member may include a flexure member configured for movement between at least the first position and the second position relative to the transducer to apply the first amount of force and the second amount of force to the transducer.

Preferably, the transducer may include at least one of a mechanical tactile type transducer, a mechanical displacement type transducer, a pneumatic touch type transducer, a foil switch type transducer, a digital tactile sensor array type transducer, a capacitive type transducer, a metal strain gauge type transducer, a semiconductor strain gauge type transducer, a piezoresistive type transducer, a pyroelectric type transducer, a sputtered thin film strain gauge type transducer, an optical type transducer, a magnetic type transducer, an ultrasonic type transducer, a chemical printing type force transducer, and an electro-chemical type transducer.

Preferably, the present invention may include an electric motor reversing module configured for reversing a polarity of the electric motor.

Preferably, the present invention may include a haptic feedback mechanism configured for producing haptic feedback in response to a predefined threshold amount of force being applied to the transducer by the actuator.

Preferably, the haptic feedback may be produced in response to each of a plurality of predefined threshold amounts of force being gradually applied to the transducer by the actuator.

Preferably, the haptic feedback may include at least one of vibrational motion of the electric device, an optical output of the electric device, and an aural output of the electric device.

Preferably, the electric device may include at least one of an electric power tool and an electric gardening tool.

Preferably, the actuator may be operable by at least one of a trigger and a push-button type mechanism.

### Brief Description of the Drawings

The present invention will become more fully understood from the following detailed description of a preferred but non-limiting embodiments thereof, described in connection with the accompanying drawings, wherein:
**Figure 1** shows a functional block diagram of an electronic circuit of an embodiment of the present invention;
**Figure 2** shows a first side view of one aspect of an embodiment of the present invention;
**Figure 3** shows the side view of the embodiment depicted in Fig, 3, with a cover of the housing removed to reveal the interior of the control assembly housing;
**Figure 4** shows a second side view of one aspect of an embodiment of the present invention;
**Figure 5** shows a perspective view of one aspect of an embodiment of the present invention; and
**Figure 6** shows a flowchart of method steps in accordance with another embodiment of the present invention.

### Detailed Description of the Preferred Embodiments

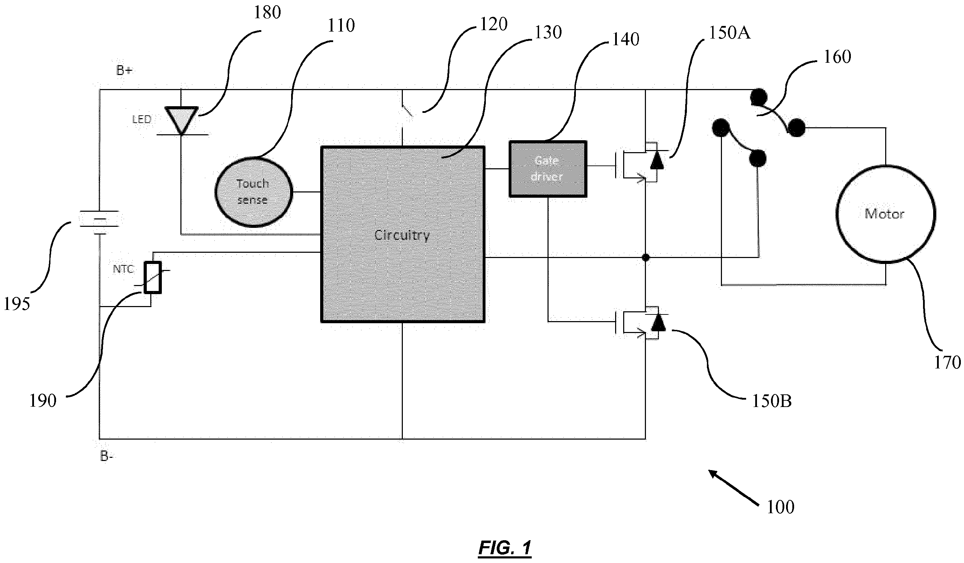

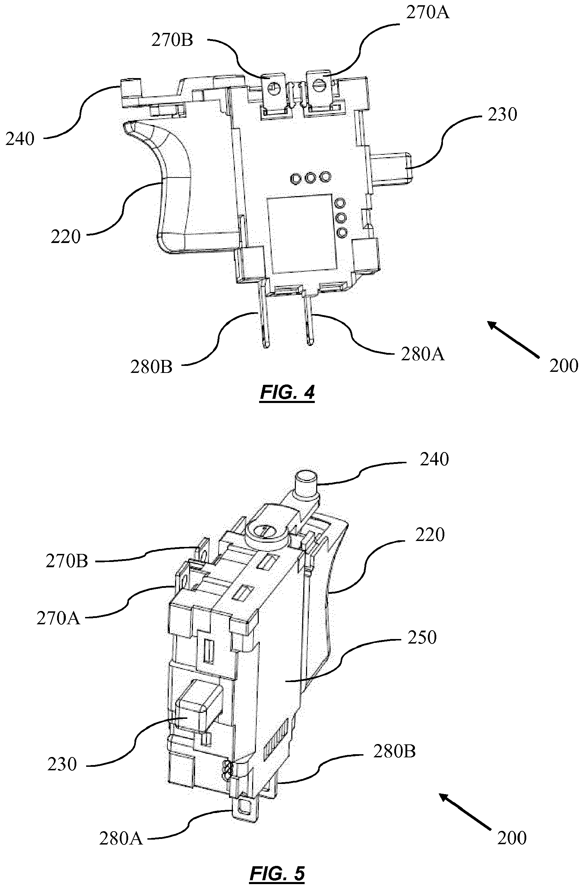

Preferred embodiments of the present invention will now be described herein with reference to Figs. 1 to 6. The embodiments comprise a variable-speed trigger control assembly (200) for use with an electric power tool having an electric motor (170) including for instance an electric drill, grinder, sander, saw, rotary driving tool and the like. It would be appreciated and understood that whilst this embodiment is described for use with an electric power tool, this is merely for purposes of illustrating functionality and alternate embodiments of the present invention may of course be used with other types of electrical devices such as gardening tools. It should also be noted that whilst the preferred embodiments described herein make reference to the use of a force sensor, in alternate embodiments any suitable type of transducer may be suitably utilised instead of a force sensor without departing from the scope of the invention. For ease of illustration the following description will therefore refer to the use of a force sensor, as a non-limiting example only, although the use of a suitable transducer may be applicable in alternate embodiments if so desired. Furthermore, whilst embodiments of the present invention described herein refer to electric devices comprising an electric motor, it would be appreciated that alternate embodiments of the present invention may also be applicable to electric devices which comprise a solenoid type electro-mechanical unit to effect operable movement (e.g. reciprocal motion) of the electric device.

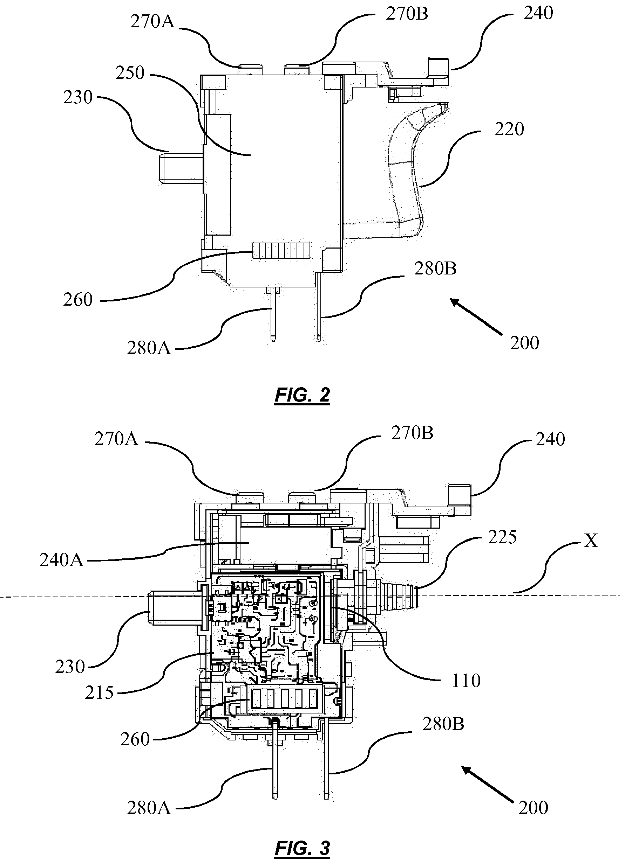

Referring to Figs. 2 to 4, the variable-speed trigger control assembly (200) includes a moulded plastic housing (250) that is mounted to a body of the electric power tool near to a handle of the electric power tool. The housing (250) includes a first housing member and a second housing member that may be snap-fitted or screwed together to substantially enclose at least some of the components of the trigger control assembly (200) therein. The variable-speed trigger control assembly (200) includes an actuator having a finger-operable portion (220), and, a force sensor engagement portion (225) configured for slidable linear movement relative to a force sensor (110) along a movement axis (X) relatively inwardly of an opening in the housing (250) from an OFF position towards an ON position, and, relatively outwardly of the opening in the housing (250) from the ON position toward the OFF position. When the actuator (220,225) is arranged in the OFF position, the electric motor (170) is configured to operate at substantially zero rotational speed. When the actuator (220,225) is arranged in the ON position, the motor is configured to run at a relative maximum speed. As the actuator (220,225) moves through varying intermediate positions relative to the force sensor (110) between the ON and OFF and different amounts of force are applied to the fore sensor (110), the electric motor (170) is configured to operate at correspondingly varying speeds. The actuator (220,225) may be biased in to the OFF position by a biasing element which may comprise for instance a return spring. Alternately, the biasing element may be integrally formed with the actuator (220,225), for instance comprising a flexure member or the like that may be elastically deformable.

In embodiments of the present invention, the force sensor (110) may be comprised by any number of types of force sensor including for instance a mechanical tactile type force sensor, a mechanical displacement type force sensor, a pneumatic touch type force sensor, a foil switch type force sensor, a digital tactile sensor array type force sensor, a capacitive type force sensor, a metal strain gauge type force sensor, a semiconductor strain gauge type force sensor, a piezoresistive type force sensor, a pyroelectric type force sensor, a sputtered thin film strain gauge type force sensor, an optical type force sensor, a magnetic type force sensor, an ultrasonic type force sensor, a chemical printing type force sensor, and an electro-chemical type force sensor. By way of example, a thin film capacitive type force sensor may be used whereby as the force sensor engagement portion of the actuator presses against the conductive plates of the force sensor (110) in response to squeezing of the finger-operable portion of the trigger, the distance between the conductive plates will change together with a capacitance measurement associated with the distance between the conductive plates. Accordingly, the capacitance measurements can be used to measure, with suitable accuracy in the context of operation of the invention, the force applied to the sensor based on linear movement of the actuator over relatively small distances of less than 1mm. In comparison, conventional trigger control assembly actuation mechanisms require an actuator to be displaced at a linear distance of around 4mm to 10mm. Alternately, in other examples, the force sensor may comprise a thin film force-sensing resistor which is configured to change resistance in a predefined manner when force is applied to its surface. The force sensor in the various examples may include a transducer module for converting measured properties (e.g. capacitance, resistance, conductivity etc.) into electrical signals which may be used by further processing modules and circuitry of the electric device to ultimately control the speed of the electric motor.

It would be further understood that in alternate embodiments of the present invention, a transducer may be used instead of a force sensor. The transducer may include for instance a mechanical tactile type transducer, a mechanical displacement type transducer, a pneumatic touch type transducer, a foil switch type transducer, a digital tactile sensor array type transducer, a capacitive type transducer, a metal strain gauge type transducer, a semiconductor strain gauge type transducer, a piezoresistive type transducer, a pyroelectric type transducer, a sputtered thin film strain gauge type transducer, an optical type transducer, a magnetic type transducer, an ultrasonic type transducer, a chemical printing type force transducer, and an electro-chemical type transducer. For the purposes of illustrating example embodiments of the present invention, reference will only be made to use of a force sensor.

The force sensor (110) is operably connected with a control module comprising for instance a semiconductor chip which are both mounted on a PCB (215) within the trigger control assembly (200) housing (250). The control module (130) is configured for receiving the output electrical signal from the force sensor (110), and outputting electrical control signals for controlling operation of the electric motor (170) corresponding to the output signals received from the force sensor (110) in accordance with a predefined conversion protocol programmed in to the control module (110) (for instance, by reference to a lookup table accessibly referenceable in a memory store of the control module chip). The control module (110) and other electronic components disposed on the PCB (215) are powered by a power supply (195) of the electric device which in this embodiment comprises a battery module (195). Positive and negative contact terminals (280A,280B) are mounted on the housing (250) as shown in Figs. 2 to 4 for suitable electrical communication with the battery module (195) of the electric device. As shown in Fig. 1, the output electrical control signals from the control module (130) are fed to the input of a gate driver circuit module (140) which is configured for driving operation of a pair of power MOSFET devices (150A,150B) to control the speed and movement of the electric motor (170). The outputs of the power MOSFET devices (150A,150B) are suitably connected to a pair of motor input terminals (270A,270B) mounted to the housing (250).

In use, the control module (130) may output a variable voltage signal in response to the variable forces indicated by the force sensor signal. The gate driver circuit module (140) may include a timing signal generator (e.g. a "555" circuit) configured for sensing the variable voltage signal output by the control module (130) in response to the varying force sensed by the force sensor. The output of the timing signal generator is coupled to input gates of the power MOSFET devices (150A,150B) whereby in response to the received timing signals, the power MOSFET devices (150A,150B) are configured to be switched on and off at timing intervals corresponding to the timing signal generator output to appropriately control the amount of power that is delivered from the battery (195) and hence the speed of the motor.

Also as shown in the electrical circuit diagram of Fig. 1, the control assembly includes an electric motor reversing module (160) which is operable by a reversing lever (240) (as shown in Fig. 2-4) configured for reversing a polarity of the electric motor (170) and hence the direction of rotation of a drill bit or any other functional attachment mechanically connected to the electric motor (170).

In the preferred embodiments, the control assembly (200) further includes a tactile switch (120) which is operably connected with the actuator (220,225). The tactile switch (130) is configured such that, responsive to the force sensor (225) engagement portion of the actuator (220,225) applying pressure against the force sensor (110), the tactile switch (120) is configured to be switched ON whereby power is supplied to the control module (130) from the battery module (195) so that the electric motor (170) may be controlled by the output electrical signals from the control module (170). Conversely, the tactile switch (120) is configured such that, responsive to the force sensor engagement portion (225) of the actuator (220,225) not applying any force against the force sensor (110), the tactile switch (120) is configured to be switched OFF whereby supply of power from the battery (195) to the control module (130) is disconnected thereby halting operation of the electric motor (170). Advantageously, this provides a safety feature of the embodiment in that the electric motor (170) is not operable in the event of mis-triggering of the force sensor (110), for instance due to faulty operation of the force sensor (110). As can be seen from Figs. 2 to 4, the tactile switch (120) may include an actuator (230) that is configured for linear movement in alignment with the movement axis (X) along which the trigger control assembly actuator (220,225) is linearly movable. Accordingly, when the actuator (220,225) of the trigger control assembly (200) moves inwardly of the housing (250) to apply a force against the force sensor (110), the actuator (230) of the tactile switch (120) will also be urged in a linear direction relative to the tactile switch (120) to activate the control module (130). In alternate embodiments, the tactile switch (120) may be operably connected to other electrical circuit components of the trigger control assembly (200) in any number of alternate arrangements and configurations which may substantially achieve the same safety functional outcome of deactivating operation of the electric motor (170) where the actuator (220,225) of the trigger control assembly (200) has not been operated by a user. It would be understood that whilst a tactile switch (130) is described in use in these particular exemplary embodiments of the present invention, it is possible in alternate embodiments to suitably configure any other type of switch or sensor (instead of a tactile type sensor) for the purpose of enabling cutting off-operation of the electric device when the actuator is not applying force to the force sensor.

In embodiments of the present invention, the trigger control assembly (200) further includes a temperature sensing element (190) such as an NTC type thermistor disposed on the PCB (215) that is operably connected with the control module (130) and other electronic components. As the resistance through the thermistor is temperature dependent, as a DC current is passed through the thermistor form the control module (130), if the ambient temperature exceeds a threshold value, the output voltage across the thermistor is configured to deactivate operation of the control module (130) and hence deactivate operation of the electric motor (170). This is a desirable safety feature to alleviate risk of damage to the electric device and to a user due to overheating of the electric device. As can be seen an LED indicator (180) is also provided on the PCB (215) which is operably connected with the control module (130) and configured to output varying light emission characteristics (e.g. different output colour changes) indicative of operational modes of the electric device. For instance, where the electric device is switched on, a green light may be emitted from the LED, and where a fault is detected in the force sensor or other component a red light may be emitted from the LED.

Yet further, in preferred embodiments of the present invention a heat sink element (260) is located within the housing (250) and configured for thermal communication with the PCB (215) and any other components to assist in dissipating thermal energy from such components of the electric device into ambient air via a vent disposed in a wall of the housing (250).

In certain embodiments of the present invention, the trigger control assembly may include a haptic feedback mechanism configured for producing haptic feedback in response to a threshold amount of force being applied to the force sensor by the actuator when the user squeezes the finger-operable portion of the actuator. The haptic feedback may include for instance vibrational motion of the trigger control assembly of the electric device which may be felt by the user's hand gripping the trigger. As the user squeezes the finger-operable portion of the actuator so as to gradually increase the amount of force applied to the force sensor, the haptic feedback mechanism may be configured to produce haptic feedback responses at each time the force applied to the force sensor gradually exceeds gradually increasing threshold amounts of force. Advantageously, as the physical displacement of the actuator may be less than 1mm in distance, the operation of the haptic feedback mechanism may assist in providing the perception of depth of movement of the actuator as the user squeezes of the trigger to step up the speed of the motor.

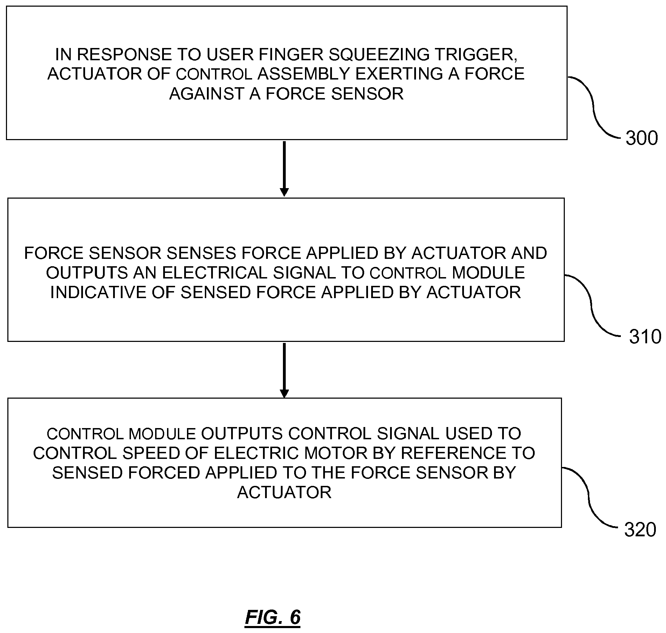

Figure 6 of the drawings is provided to further summarise the broad process steps involved in a further embodiment of the present invention whereby block (300) represents the step of the actuator of the trigger control assembly applying a force against a force sensor in response to user finger squeezing trigger, block (310) represents the step of the force sensor sensing force applied by the actuator and outputs an electrical signal to control module that is indicative of sensed force applied by actuator, and block (320) represents that step of the control outputting a control signal used to control a speed of an electric motor of the power tool by reference to the sensed force applied to the force sensor by actuator. The control module may for instance output predefined control signals (cross-referenceable via a lookup table stored in a memory module of the control module) corresponding to the sensed forces applied to the force sensor.

It will become apparent from the disclosure that embodiments of the present invention may assist providing one or more of the following advantages over the existing art:
(i) the range of threshold forces required to be applied by the user's finger to trigger variable speed operation of the motor may be calibrated to accommodate a range of lower threshold forces compared to operation of a conventional trigger control assembly comprising a spring-biased actuator. Accordingly, this may be better suited for use by user's having relatively weak finger strength;
(ii) embodiments of the present invention utilise less moving parts than compared to conventional trigger assemblies comprising spring-biased actuator, and this may alleviate incidence of wear and damage to the trigger control assembly, as well as alleviating costs associated with maintenance and repair of the electric device due to wear and damage arising;
(iii) embodiments of the present invention utilise a force sensor or transducer which may be acted upon by movement of an actuator along a relatively small travel distance (e.g. less than 1mm) to produce a suitable range of force readings with suitable degree of accuracy to effect variable speed control of the motor. In comparison, the range of movement of a spring-biased actuator in certain conventional trigger assemblies is typically at least within 4mm-10mm. Accordingly, embodiments of the present invention provide for a relatively compact and lightweight trigger control assembly which may conveniently reduce the overall size and weight of the electric device for improved storage, portability and hand-feel. Furthermore, the relatively small travel distance of the actuator, being typically less than 1mm, means that a shorter actuator may be used for triggering and changes in the speed of the motor may be controlled more responsively due to the shorter travel distance required of the actuator during triggering; and
(iv) the use of certain force sensors or transducers including for instance thin film type force sensors or transducers in trigger assemblies of embodiments of the present invention may be advantageous over certain existing trigger assemblies in that force sensors or transducers may be relatively cost-effective to manufacture and tend to exhibit relatively good shock resistance so as to be suitable for application in power tools and the like.

Whilst embodiments described above relate to trigger assemblies for effecting variable speed control of an electric motor, it would be appreciated that in certain embodiments, there may only be necessity for an ON and OFF state of the electric motor whereby the ON state may be a relative maximum speed of the electric motor. Such embodiments may be readily implemented by for instance configuring the control module to only outputting two control signals to the electric motor - that is, an OFF control signal used to deactivate operation of the electric motor when the sensed force falls below a predefined threshold force value, and, an ON control signal used to activate operation of the electric motor at a maximum speed of operation when the sensed force is equal to or greater than the predefined threshold force value. No intermediate threshold force values would be used to control operation of the electric motor at intermediate speeds between the maximum ON and OFF settings.

Those skilled in the art will appreciate that the invention described herein is susceptible to variations and modifications other than those specifically described without departing from the scope of the invention. All such variations and modification which become apparent to persons skilled in the art, should be considered to fall within the spirit and scope of the invention as broadly hereinbefore described. It is to be understood that the invention includes all such variations and modifications. The invention also includes all of the steps and features, referred or indicated in the specification, individually or collectively, and any and all combinations of any two or more of said steps or features.

The reference to any prior art in this specification is not, and should not be taken as, an acknowledgment or any form of suggestion that that prior art forms part of the common general knowledge.

## Claims

1. A control assembly for controlling operation of an electric device having an electric motor, the control assembly including:
a force sensor;
an actuator configured for movement relative to the force sensor between at least one of a first relative position and a second relative position so as to apply at least one of a first amount of force and a second amount of force against the force sensor; and
a control module configured for receiving from the force sensor at least a first signal indicative of the first amount of force and a second signal indicative of the second amount of force being applied against the force sensor by the actuator, wherein, the control module is configured for outputting control signals for controlling a speed of the electric motor by reference to the first amount of force and the second amount of force indicated by the received first and second signals.

2. A control assembly as claimed in claim 1 wherein the first amount of force includes a relative minimum amount of force applied against the force sensor by the actuator, and, the second amount of force includes a relative maximum amount of force applied against the force sensor by the actuator, and whereby the control module is configured for outputting control signals for controlling a speed of the electric motor at a relative minimum speed and at a relative maximum speed respectively, by reference to the first amount of force and the second amount of force indicated by the received first and second signals.

3. A control assembly as claimed in claims 1 or 2 wherein a distance of movement of the actuator relative to the force sensor between the first relative position and the second relative position is less than approximately 1mm.

4. A control assembly as claimed in any one of claims 1 to 3 including at least one of a switch and a sensor operably connected with the actuator to produce an output indicative of an amount of force being applied by the actuator to the force sensor, whereby operation of said electric device is configured to be disabled in response to the output of said at least one of the switch and the sensor being indicative of force applied by the actuator to the force sensor falling below a threshold level.

5. A control assembly as claimed in any one of claims 2 to 4 wherein the actuator is configured for movement relative to the force sensor into at least one intermediate position disposed between the first relative position and the second relative position so as to apply an intermediate amount of force between the relative minimum and relative maximum amounts of force against the force sensor, and whereby the control module is configured for receiving a signal from the force sensor indicative of the intermediate amount of force being applied against the force sensor by the actuator, whereby the control module is configured for outputting a control signal for controlling a speed of the electric motor by reference to the intermediate amount of force indicated by the received signal.

6. A control assembly as claimed in any one of the preceding claims wherein the actuator member includes a flexure member configured for movement between at least the first position and the second position relative to the force sensor to apply the first amount of force and the second amount of force to the force sensor.

7. A control assembly as claimed in any one of the preceding claims wherein the force sensor includes at least one of a mechanical tactile type force sensor, a mechanical displacement type force sensor, a pneumatic touch type force sensor, a foil switch type force sensor, a digital tactile sensor array type force sensor, a capacitive type force sensor, a metal strain gauge type force sensor, a semiconductor strain gauge type force sensor, a piezoresistive type force sensor, a pyroelectric type force sensor, a sputtered thin film strain gauge type force sensor, an optical type force sensor, a magnetic type force sensor, an ultrasonic type force sensor, a chemical printing type force sensor, and an electro-chemical type force sensor.

8. A control assembly as claimed in any one of the preceding claims including an electric motor reversing module configured for reversing a polarity of the electric motor.

9. A control assembly as claimed in any one of the preceding claims including a haptic feedback mechanism configured for producing haptic feedback in response to a predefined threshold amount of force being applied to the force sensor by the actuator.

10. A control assembly as claimed in claim 9 wherein the haptic feedback is produced in response to each of a plurality of predefined threshold amounts of force being gradually applied to the force sensor by the actuator.

11. A control assembly as claimed in claims 9 or 10 wherein the haptic feedback includes at least one of vibrational motion of the electric device, an optical output of the electric device, and an aural output of the electric device.

12. A control assembly as claimed in any one of the preceding claims wherein the electric device includes at least one of an electric power tool and an electric gardening tool.

13. A control assembly as claimed in any one of claims 1 to 12 wherein the actuator is operable by at least one of a trigger and a push-button type mechanism.

14. A control assembly for controlling operation of an electric device having an electric motor, the control assembly including:
a transducer;
an actuator configured for movement relative to the transducer between at least one of a first relative position and a second relative position so as to apply at least one of a first amount of force and a second amount of force against the transducer; and
a control module configured for receiving from the transducer at least a first signal indicative of the first amount of force and a second signal indicative of the second amount of force being applied against the transducer by the actuator, wherein, the control module is configured for outputting control signals for controlling a speed of the electric motor by reference to the first amount of force and the second amount of force indicated by the received first and second signals.

15. A control assembly as claimed in claim 14 wherein the first amount of force includes a relative minimum amount of force applied against the transducer by the actuator, and, the second amount of force includes a relative maximum amount of force applied against the transducer by the actuator, and whereby the control module is configured for outputting control signals for controlling a speed of the electric motor at a relative minimum speed and at a relative maximum speed respectively, by reference to the first amount of force and the second amount of force indicated by the received first and second signals.
